# EUROPÄISCHE PATENTSCHRIFT

(11) **EP 1 788 865 B1**
(45) Veröffentlichungstag und Bekanntmachung des Hinweises auf die Patenterteilung: **21.10.2009**
(21) Anmeldenummer: 05778438.1
(22) Anmeldetag: 01.08.2005
(51) Int. Cl.: A01K 5/02, A01K 15/02

(54) **TIERTRAININGSVORRICHTUNG**
TRAINING DEVICE FOR ANIMALS
DISPOSITIF D'ENTRAINEMENT POUR DES ANIMAUX

(30) Priorität: 16.08.2004 DE 102004041001; 28.04.2005 DE 102005019774; 06.05.2005 DE 202005007498 U; 21.06.2005 DE 202005010210 U; 25.07.2005 DE 202005011646 U
(43) Veröffentlichungstag der Anmeldung: 30.05.2007
(60) Teilanmeldung: 09002556.0
(73) Patentinhaber: Groß, Fritz, 70435 Stuttgart (DE)
(72) Erfinder: Groß, Fritz, 70435 Stuttgart (DE)
(74) Vertreter: Gleiss & Grosse
(86) Internationale Anmeldenummer: PCT/DE2005/001354
(87) Internationale Veröffentlichungsnummer: WO 2006/018000

(56) Entgegenhaltungen:
- EP-A- 0 505 049
- DE-A1- 3 744 337
- DE-A1- 10 034 796
- FR-A- 2 565 066
- US-A1- 2004 059 466

## Beschreibung

Diese Entwicklung soll eine Trainingshilfe für Tiere sein.
Das Tier wird gefordert, ohne das ein Mensch zwingend dabei sein muss.
Futter (Spielzeug oder sonstige attraktive Objekte) wird zugänglich gemacht, und bevor das Tier das Futter erreicht, kann es unzugänglich gemacht werden.
Möglich ist auch, dass das Tier das Futter oder den Gegenstand zwar manchmal noch erreicht, dieses oder diesen aber sich dann trotzdem weiter wegentfemt und letztlich doch nicht mehr erreichbar ist.
Von Zeit zu Zeit soll das Tier das Futter natürlich auch erreichen, so dass es motiviert bleibt.
Sie ist gedacht für alle Tierarten, insbesondere aber für Hunde und Katzen. Unterschiedlichste Konstruktionen sind denkbar.
Diese können je nach Verhaltenseigenschaften der einzelnen Tierarten, auch entsprechend abgeändert werden.

Z.B. für Katzen, wobei bei diesen der Aspekt des Anschleichens und Belauerns eine größere Bedeutung hat. Aber auch in diesen Fällen kommt es darauf an, das Futter gezielt erscheint und wieder verschwindet.

So sind Konstruktionen denkbar, wo das Leckerchen aus einer Luke ausgefahren wird und nach einer bestimmten Zeit wieder reingezogen wird. Diese sind als Beschäftigung für alle Tierarten geeignet, werden aber im folgenden speziell für die Katzen beschrieben, da ihre Anwendung bei dieser Tierart am verständlichsten ist.

Insbesondere in Großstädten können Katzen oft nicht nach draussen gelassen werden.
Sie bekommen dann zu genauen Zeiten ihr meist üppiges Futter vorgesetzt, was der Gesundheit nicht zuträglich ist.
Anders als in der freien Natur müssen sie nichts für das Erjagen der Beute tun. Artgerechter ist es, wenn die Katze durch Anschleichen, Warten, Belauern und Anspringen ihr Futter erhält.
E werden deshalb Anordnungen vorgestellt, die diesen natürlichen Vorgang nachahmen, und so die Katze zeitweise körperlich und geistig fordern, z.B. wenn der Besitzer tagsüber aus dem Haus ist.

Zunächst bedarf es eines Bauteils, das dafür sorgt, dass die Maus (Futter) zeitweise zum Vorschein kommt und zeitweise verschwindet. Dies erregt die Aufmerksamkeit der Katze, sie beobachtet und schleicht sich an. Das sich bewegende Teil kann dem Aussehen einer Maus teilweise nachempfungen sein, letztendlich wird es sich aber um ein Futtergefäß handeln, indem sich schmackhaftes Futter befindet.
Das Futtergefäß kann sich z.B. auf einer Schiene, einem Band oder an einem Gestänge usw. gleichmäßig hin -und her bewegen (vor und in den Futterkasten F), es könnte aber auch so gesteuert sein, das es durch unregelmäßige Bewegungen (wechselnde Geschwindigkeit, Pausen, verschiedene Bewegungsbahnen) noch mehr Aufmerksamkeit erregt. Es sind die verschiedensten Konstruktionen denkbar, die ein Hin- und Herbewegen bewerkstelligen.

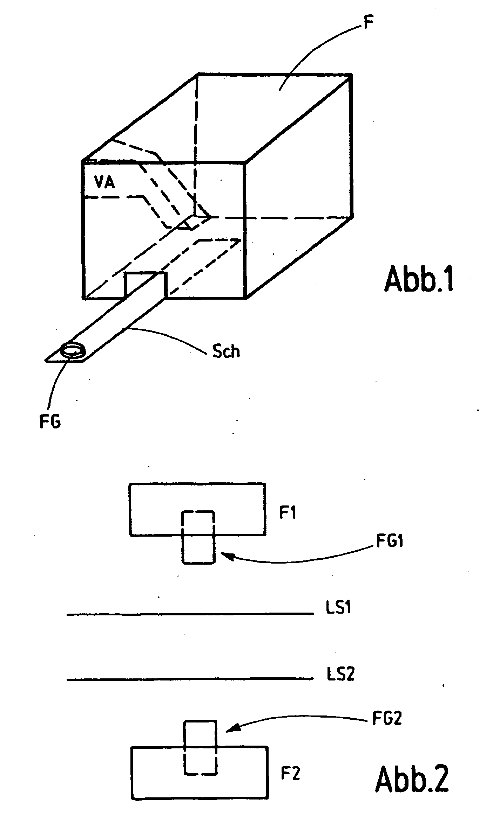

**Abb. 1** zeigt ein Beispiel eines Futterkasten F mit einem sich auf z.B. einer Schiene Sch sich bewegendem Futtergefäß FG.
Das Ganze muss elektronisch gesteuert sein, das Futtergefäß wird vom Katzenhalter entweder einmal gefüllt und dann von der Katze ihrgendwann leergefressen, oder das Futtergefäß könnte auch so kontruiert sein, dass es nach einem Fang sich im Futterkasten aus einer Vorratsabteilung VA wieder neu belädt, durch eine automatische Steuerung mit entsprechender mechanischer Zuteilung.

Eine mögliche Anordnung kann so aussehen. **Abb. 2**
Der Futterkasten F steht an einer Wand oder einer Ecke des Zimmers.
In einiger Entfernung von diesem wird eine Lichtschranke LS eingerichtet.
Sobald die Katze diese kreuzt, wird das Futtergefäß FG blitzschnell in den Futterkasten gezogen und bleibt dort bis auf weiteres verharren, unerrreichbar für die Katze. Der Abstand der Lichtschranke LS vom Futtergefäß FG muss so groß sein, dass es die Katze nicht schaffen kann rechtzeitig das Futtergefäß FG zu erreichen, da es durch Auslösen der Lichtschranke blitzschnell zurückgezogen wird.
Damit die Katze nicht unendlich wartet, wäre es sinnvoll ein zweites System in dem Zimmer aufzustellen, das mit dem ersten System elektronisch verbunden ist. ( F2, LS2)
Wenn die Katze durch die Lichtschranke LS1 läuft, wird FG1 in den Futterkasten F1 gezogen. Gleichzeitig wird elektronisch gesteuert mit wechselnder Zeitverzögerung das Futtergefäß FG2 in Bewegung gesetzt. Dies lenkt die Aufmerksamkeit der Katze nun auf dieses Futtergefäß und sie startet einen neuen Angriff. Sobald sie aber beim Anschleichen die Lichtschranke LS2 aktiviert, dreht sich das Spiel um und Futterkasten F1 steht wieder im Mittelpunkt.
Zwischen LS1 und LS2 kann der Katzenhalter Gegenstände aufbauen, die der Katze zum Verstecken und Anschleichen dienen.

Wie kommt das Ganze jetzt zum Ende? Nachdem die Katze vielleicht 10 erfolglose Angriffsversuche gestartet hat, könnte sich die elektronische Steuerung so schalten, dass beim Durchkreuzen z.B. der Lichtschranke LS2 das Futtergefäß FG2 nach außen fährt und dann dort fest bleibt. So könnte die Katze in Ruhe das Futter freßen. Geht Sie danach noch durch die Lichtschranke LS1 geschieht das gleiche dort und die Katze hat ihre verdiente Mahlzeit.
Das System schaltet dann ab, bis der Tierbesitzer es wieder neu aktiviert.

Die elektronische Steuerung der einzelnen Element kann über Funksteuerung erfolgen, da sich das Ganze aber in einem Zimmer abspielt, wäre auch ein verkabeltes System mit Steckdosenanschluss möglich.

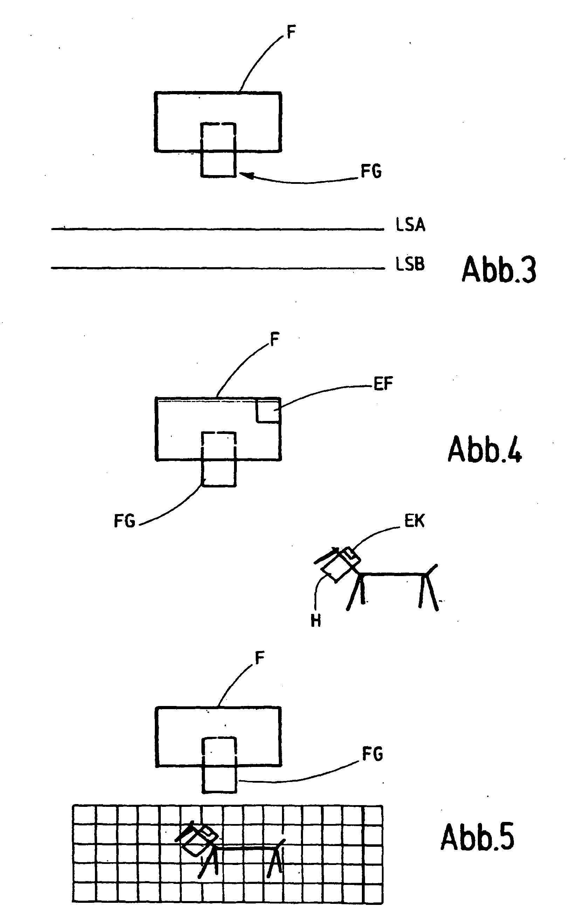

Natürlich wäre es auch möglich, nur ein System zu installieren (F1, LS1), die Katze würde sich dann aber zu lange neben das Futtergefäß setzen und warten. Sie müsste dann z.B. durch ein akkustisches Geräusch oder Wasser vertrieben werden oder indem ein Leckerchen mittels einer kleinen Schleudereinrichtung weit aus F1 rausgeschleudet wird, und sie so von F1 wegbringt. Dann bräuchte man aber zwei Lichtschranken, um zu erkennen, ob sich die Katze in Richtung Futtergefäß bewegt hat, oder von ihm weg, und dann das Futtergefäß entweder aktiviert oder gestoppt wird.
D.H. wird zuerst Lichtschranke LSA durchschritten und dann Lichtschranke LSB, so führt dass zu einem evtl. auch zeitverzögerten Aufnehmen der Bewegung des Futtergefäßes.
Wird zuerst Lichtschranke LSB durchschritten und dann Lichtschranke LSA wird das Futtergefäß zurückgezogen. **Abb. 3**

Wichtig ist dabei natürlich auch, in welcher Reihenfolge dann die Lichtschranken verlassen werden, um auszuschließen, dass die Katze auf halber Strecke evtl. eine rasche Wendung vollzieht. D.H. wird zuerst LSA durchschnitten, dann LSB, so muss danach erst LSB durchschnitten werden, sonst stoppt das System weiterhin.

Die Katze kann auch mittels eines Halsbandes entsprechende Rezeptoren oder Sender tragen EK, die mit Rezeptoren und Sendern im Futterkastern korrespodieren EF, womit ihr Standpunkt immer genau definiert wäre. **Abb. 4**
Es können sämtliche aus der Technik bekannten Abstandsmesser,
Positionsmesser, Kontrollschranken oder Erkennungssyteme zum Einsatz kommen (z.B. Laser, Infrarot, Funkwellen usw.)
Es wären dann kompliziertere Schaltungen möglich, die das Verhalten des Futtergefäßes FG immer genau auf die jeweilige Position der Katze abstimmen.
So könnte auch mittels ausgelegter Kabel Quadrate definiert werden, die die genaue Position des Tieres melden. **Abb. 5**
Oder es werden magnetische oder elektromagnetische Felder oder sonstige technische Felder erzeugt, und so Areale definiert.

Anstatt der Lichtschranken, wären auch Anordnungen mit Bewegungsmeldem denkbar, die einzelne Bereiche abdecken und bei Aktvierung dann das Futter verschwinden lassen

Denkbar ist natürlich auch, dass die Katze bei enormer Anstrengung das sich bewegende Futtergefäß FG doch manchmal noch erreichen kann, es festhalten und leerfressen kann. Diese Festhalten des sich mit leichter Kraft wegbewegen wollenden Futtergefäßes FG mit der Tatze oder dem Mund würde dann auch das übliche Spielen der Katze mit der gefangenen Maus simulieren. Dazu muß die Konstruktion natürlich so gestaltet werden, dass die Katze sich nicht verletzen kann. Es ist natürlich auch möglich, dass die Katze das sich bewegende Futtergefäß nicht stoppen kann, sondern das Futter oder Leckerchen aus diesem herausfischen muss.

Denkbar ist natürlich auch, dass bei Anwesenheit des Besitzers dieser einfach mittels einer Fernbedienung die Bewegungen des Futtergefäßes FG steuert.
Dies würde dann eine ganz eigenständige Vorrichtung darstellen, das Besondere wäre aber, dass das Futtergefäß FG zeitweise verschwinden kann, dies erregt die besondere Aufmerksamkeit der Katze.

Zur zusätzlichen Stimulation der Katze sind Mausgeräusche denkbar.

Diese Systeme sind selbsfirecständlich auch gut geeignet zur Beschäftigung für andere Tierarten, die mit Anschleichen usw. arbeiten, z.B. Zootiere (Raubkatzen)

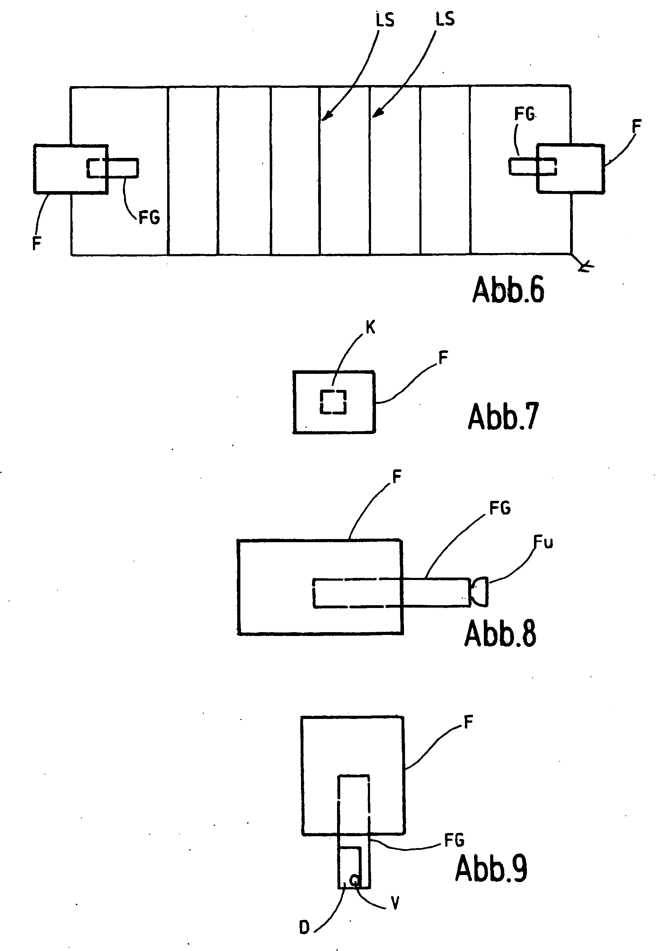

Überhaupt könnten sich zwischen den beiden Futterkästen F mehrere Messbereiche befinden, z.B. mehrere Lichtschranken LS, deren Aktivierung durch die Katze unterschiedlichste Bewegungen der Futtergefäße FG zur Folge hat. **Abb.6**

Ein Einklemmen der Katzenpfote in den sich zurückziehenden Futterkasten könnte durch Konstruktionen, wie in **Abb 7** (Vorderansicht) gezeigt verhindert werden.
Dabei läuft das als Kolben K ausgebildete Futtergefäß glatt in den Futterkasten F, so dass es keinen Zwischenspalt gibt, wo sich die Katze einklemmen kann.
Das Futter Fu befindet sich im vorderen Teil und ist dort am Kolbenende befestigt und wird dann wenn der Kolben außerhalb zum Stehen kommt, dort von der Katze weggenommen. **Abb. 8** (Seitenansicht)
Oder das Futtergefäß F hat oben einen gut schließen Deckel D , dessen Verschluss V nach Bearbeitung durch eine Katzenpfote dann von selbst aufspringt. **Abb.9**

Z.B. beim Hund steht eher das Motivieren zum schnellen Rennen im Vordergrund, so dass ein gezeigtes Futter nach einer bestimmten Zeit verschwindet, z.B. indem es durch eine Klappe in eine verschlossene Box fällt, so dass er es nicht erreicht, wenn er nicht schnell genug dort hinrennt.

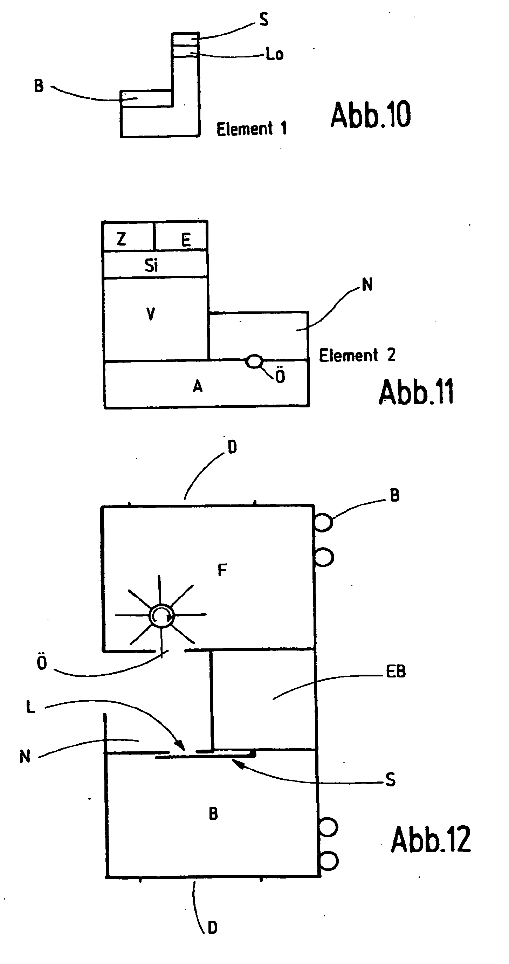

Diese Entwicklung soll eine Trainingshilfe für einen Hund sein. Nur ein müder Hund ist ein guter Hund. Manchmal hat der Hundehalter nicht genügend Zeit für den Auslauf, vielleicht auch nicht zum Spielen im Garten.
Dann kann diese Erfindung eine Alternative darstellen und die sonstigen Bewegungen des Hundes ergänzen.
Der Hund wird gefordert, ohne das ein Mensch dabei sein muss. Für rasches Erfüllen der Aufgabe gibt es ein Leckerchen, dass heißt, der Hund verdient sich seine Nahrung ein Stück weit wie er es auch in der Natur täte, nämlich durch schnelles Rennen und Erfassen der Beute.
Der Hund kann damit auch insbesondere zum schnellen Rennen und Beschleunigen animiert werden, dies ist insbesondere für sehr laufstarke Rassen wichtig.
Der Erfindung besteht im einfachsten Fall aus zwei Elementen, die in beliebigen Abstand zueinander aufgestellt werden, z.B. im Garten im Abstand 40 m, auf einer Wiese 100 , im Haus 10 m usw.
Element 1 beinhaltet einen elektronischen Sender S, der nach Berührung durch den Hund am Berührungspunkt B ein Signal an den Empfänger E in
Element 2 sendet. **Abb 10** und **Abb. 11**
Element 2 enthält den Empfänger. Sobald der Empfänger das Signal vom Sender S erhalten hat, wird ein Zeitschalter Z aktiviert, der ein Leckerchen aus dem Vorratsbehälter V in den Napf N freigibt.
Der Napf hat unten eine Öffnung Ö, die sich nach einer gewissen Zeit öffnet.
Hat der Hund bis dahin nicht das Leckerchen abgeholt, so fällt es durch diese Öffnung nach unten in den Auffangbereich A und ist dann für den Hund nicht mehr erreichbar.

Der Empfänger wird nach Aktivierung ein z.B. akkustisches Signal abgeben (Signalgeber Si), dass dem Hund anzeigt, dass das Leckerchen jetzt bereitliegt.
Das akkustische Signal kann z.B. so gestaltet sein, dass hintereinander drei verschiedene angenehme Töne erzeugt werden, so dass der Hund bald lerntdass er sich beeilen muss, um spätestens beim dritten
Ton den Napf zu erreichen.
Zusätzlich könnte sich auch im Element 1 eine Zeitschaltuhr befinden, die nach einer vom Hundehalter einzustellenden Zeit auch z.B. ein akkustisches Signal Locksignal Lo abgibt und so dem Hund anzeigt, das nunmehr der Sender durch Berührung wieder aktivierbar ist.
Kommt er nicht gleich wird er durch ein späteres Signal wieder daran erinnert.
Auf diese Weise kann ein Hund eine gewisse Zeit in Aktion gehalten werden.

Wenn es um Futter geht ist jeder Hund normal sehr lernfähig, der Besitzer kann durch anfängliches Mitrennen dem Hund zeigen wie es geht.

Andere Konstruktionen sind denkbar, z.B. wo das Leckerchen aus einer Luke ausgefahren wird und nach einer bestimmten Zeit wieder reingezogen wird.

Für die genaue Konstruktion sind eine Vielzahl von Anordnungen denkbar, wichtig ist, dass sich der Hund auch bei schnellem Heranstürmen nicht verletzt, und dass er andererseits die Elemente nicht zerstören oder umstürzen kann, wodurch sich z.B. eine Konstruktion aus Metall oder ähnlich robustem Kunstoff, Holz, sowie anderen stabilen Materialen anbietet, und dass Ganze möglichst flach ist, so dass es nicht schnell umstürzt.
Evtl benötigt man Befestigungen zum Feststecken in einer Wiese, zum Anbinden an einem Fixpunkt, oder Möglichkeiten um das Ganze zu Beschweren, z.B. durch einen Stein.
Der Schließmechanismus des Napfes oder sonstigen Leckerchenanbieters muss so gestaltet sein, dass ein Einklemmen des Mundes, der Nase, oder der Zunge nicht möglich ist.
Es könnten auch abwechselnd verschiedene Leckerchen oder Spielzeug usw. in verschiedenen Fächern freigegeben werden um den Hund zu überraschen und bei Laune zu halten.
Anstatt der akustischen Signale sind auch andere Signale denkbar, auf die ein Hund gut reagiert, z.B. Lichtzeichen, oder Bewegungen z.B. durch einen mechanischen Arm an Element 1 und 2, oder auch abgespeicherte Worte und Kommandos seines Besitzers (digitaler Voicerecorder)

Beschäftigt sich der Hund nach Ablauf des Spiels doch noch sehr lange mit Element 1 oder 2, z.B. durch Attackieren und Benagen, so könnte man dort z.B. eine Einstellung vornehmen, das nach einer bestimmten Zeit ein unahngenehmer Ton ertönt, der den Hund fürs erste vertreibt

Oder man würde letzlich die Konstruktion doch so machen, das beide Elemente abwechselnd als Sender und Empfänger arbeiten und so den Hund von einer Station zur nächsten leiten.
Hat er gerade seine Belohnung bei Element 1 abgeholt, so ertönnt nach einer gewissen Zeit wieder das Signal bei Element 2, so dass er schnell dorthin rennen muss.
Element 1 und 2, müssten halt aufeinander abgestimmt sein. so dass sie immer abwechselnd den Hund locken. Ideal wäre auch, dass die Intervalle immer wieder varrieren und so dass Ganze spannend halten.
Hat er gerade bei Elemet 1 sein Leckerchen in Empfang genommen, so ertönnt z.B. nach einer gewissen Zeit bei Element 1 erstmal das Aufforderungsignal, dass ihn auffordert durch berühren von dem Berührungsschalter in Element 1, das akkusische Signal bei Element 2 auszulösen. Diese Verfahren würde sicherstellen.
das er dann die Ganze Strecke von 1 nach 2 in der festgelegten Zeit zurücklegen muss.
Elerment 1 und 2 könnten dann auch ganz gleich konstruiert sein.

Natürlich könnten die beiden Module auch ganz unabhängig von einander betrieben werden, und es so dem Zufall überlassen sein, wo er sich gerade befindet, wenn das Futterbereitsignal ertönt. So könnte auch ein einziger Apparat einen gewissen Trainingseffekt erzielen.
Allerdings wäre es dann besser, wenn dann eine gewisse Abstandsmessung durch ein Funksigal oder einen Durchgangsmelder oder Bewegungsmelder erfolgen würde, um sicherzustellen, dass das Tier beim Futterbereitsignal einen gewissen Abstand hat. Dazu müsste evtl. ein Sender/Empfänger am Halsband des Hundes festgemacht werden.

Grundsätzlich sollten die Zeitintervalle so eingestellt sein, dass der Hund gefordert wird, aber auch nicht überfordert, dass er also bei gutem Mitmachen in den meisten Fällen ein Erfolgserlebnis hat.

Natürlich wäre auch ein regelrechter Parcour mit mehreren Elementen denkbar, wo der Hund nach Erfüllen bestimmter Aufgaben immer wieder eine Belohnungabbekäme, z.B. auf eine Gegenstand hochspringen usw. Die Elemente wären wieder jeweils aufeinander abgestimmt.

Es wurden schon verschiedene Erfindungen vorgestellt, die einen Hund mehr Bewegung verschaffen sollen.
So z.B. DE29821473 ein Hundefutter ausgebendes Spielzeug. Der Ansatz ist ein anderer, schelles Rennen ist nicht wichtig.
Oder DE 29903105 ein steuerbarer Ball, der Weg auf dem sich der Ball und Hund bewegt ist aber nicht kalkulierbar.
DE 20301419, auch nachts ist es besser, wenn sich der Hund auf kontrolliertem Bereich bewegt.
Es wurden verschiedene Vorrichtungen vorgestellt, die abwechselnd Futter für Tiere ausgeben, allerdings nicht im Zusammenhang mit einem Wettkampfspiel. (DE20002121, DE29508575, DE3744337)

Das Ganze ist auch denkbar für andere Tierarten, z.B. als Bewegungstraining für Zootiere oder im Pferdebereich.

Eine genauere Ausführung der schon in DE 10 2004 041 001.1 erwähnten Erfindung könnte so aussehen. **Abb. 12**
Element 1 besteht aus einem Berührungssensor, einer Lichtschranke, einem Bewegungsmelder oder sonstigen Positionserfasser.
Wird die Anwesenheit des Hundes dort gemeldet, sendet Element 1 mittels eines Funksignals eine Meldung an Element 2.
Dort befindet sich im mittleren Teil ein Elektronikbereich EB, der das Signal empfängt.
Er veranlasst dann, dass ein angenehmer akkustischer Ton ertönt, der dem Hund signalisiert, dass nunmehr ein Leckerli in den Napf N gefallen ist.
Das einzelne Leckerli wird durch den Elektronikbereich gesteuert, mittels der Rastermechanik RM (z.B. wie bei einem Kaugummiapparat) vom Futterbereich F durch die Öffnung Ö in den Napf N freigegeben.
Der Napf N hat unten ein Loch L, das durch einen Schieber S verschlossen ist. Gesteuert durch den Elektronikbereich EK wird der Schieber S nach einem bestimmten Zeitintervall zurückgezogen, so dass das Leckerli in den Raum B fällt, wo es für den Hund nicht mehr erreichbar ist. (Zeitschaltuhr)

Element 2 hat an seinem oberen und unteren Ende jeweils einen Deckel D, wo der Besitzer nach Abschrauben Leckerli nachfüllen, bzw. entnehmen kann.
An seinem hinteren Bereich besitzt Element 2 Befestigungen B z.B. in Form von Schnallen, Ösen, Haken, oder sonstige Elemente zum Befestigen von Schnur, Draht oder ähnliches. Diese dienen der Befestigung von Element 2 an einem Baum, einem Pfosten usw. oder zum Beschweren mit einem schweren Gegenstand (z.B. Stein). Dies soll Element 2 stabilisieren, bei einem Heranstürmen des Hundes.

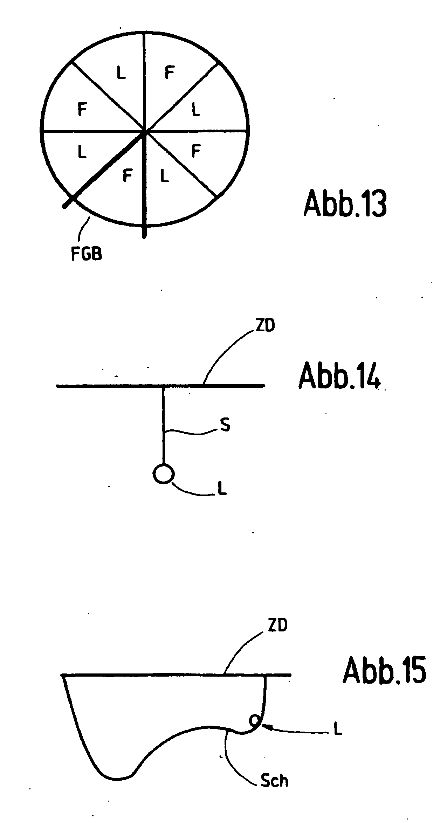

Diese vorgestellte Varriante von Element 2 kann handwerklich natürlich verschiedenst variiert werden.
Es wäre auch z.B. nur möglich das Futter sich in einem Napf befindet und der Deckel schnell auf und zugeht.
Wieder ist aber Element 1 vonnöten, das den Hund zwingt schnell von 1 nach 2 zu rennen.
Im Besein des Besitzers könnte Element 2 natürlich auch ferngesteuert bedient werden.
Möglich wäre auch eine Varriante, bei der z.B. 8 Futternäpfe duch Drehen immer einen neuen Futternapf freigeben (Freigabebereich FGB). Jeder zweite Futternapf hat Futter F die anderen Futtemäpfe wären leer L, und kommt dann zum Vorschein, wenn der Hund sich zu lange Zeit lässt. **Abb. 13**

Eine Variante, die insbesondere für Hunde sehr geeignet erscheint, wäre eine Konstruktion, in der ein Futterspender z.B. an einer Zimmerdecke ZD oder an einer sonstigen hohen Befestigung z.B. Baum montiert wäre, und z.B. mittels einer Schnur oder einer Gummischnur usw. (wie beim Bungeespringen) immer wieder ein Leckerli L nach unten freigibt.
Wenn der Hund nicht schnell genug da ist, wird das Leckerli wieder nach oben gezogen und ist dann nicht mehr erreichbar. **Abb. 14**
Denkbar wäre auch anstelle des Leckerli, das Herablassen eines stabilen Spielzeugs (Zahnknoten, Trainingsdummy, Spielring, Baumwollknoten). Dieses wird ebenfalls nach einer bestimmten Zeit oder bei Aktivierung eines Positionsmelders weggezogen, in diesem Fall unerreichbar Richtung Decke.
Es wäre aber auch möglich, dass der Hund auch das Spielzeug rechtzeitig erreicht und er damit mehr oder weniger lang spielen kann, bevor es durch die Anordnung im dann durch Hochziehen doch wieder entwendet wird. Vorraussetzung wäre, dass die ganze Anordnung dann sehr stabil konstruiert ist. (Seil, Drahtseil, Kette, stabiles Spielzeug usw. )

Oder das Leckerli L würde sich entlang einer Schiene Sch bewegen, die nur ein zeitweises Erfassen bei einer bestimmten Wegstrecke durch den Hund ermöglicht. **Abb. 15**

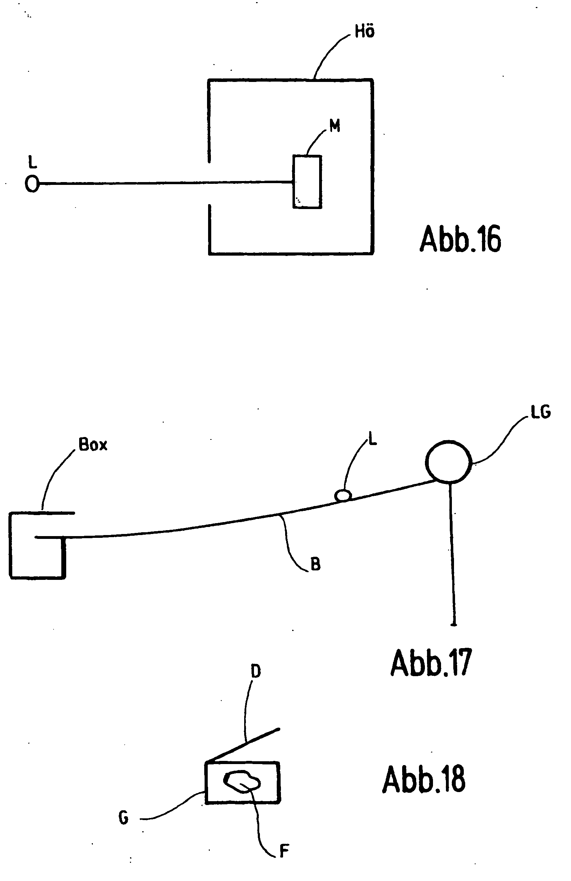

Eine andere Variante würde sein, dass das Leckerli für den Hund erkennbar langsam verschwindet und in so zu schnellem Rennen animiert. Z.B. indem es langsam durch eine Mechanik M in eine Höhle gezogen oder gefahren wird. **Abb. 16**

Oder indem es langsam zur Zimmerdecke gezogen wird, wo es ab einer bestimmten Höhe dann von dem Hund nicht mehr erreicht wird. **Abb. 17**

Oder das ein aus dem Leckerligefäß LG entlassenes vorzugsweise rundes Leckerli L langsam eine Bahn B herunterläuft,wo es von dem Tier abgefangen werden kann.

Hat es allerdings das Ende der Bahn erreicht, rollt es in eine Box und ist damit nicht mehr erreichbar. **Abb. 18**

Natürlich sind auch Varrianten denkbar, wo Futter F in einem Gefäß G angeboten wird, und danach durch einen sich schließenden Deckel D wieder unerreichbar ist. **Abb. 19**

Das Zeitintervall nachdem immer ein Leckerli freigegeben wird kann dem Zufall überlassen sein, ebenso das Zeitintervall wie lange das Leckerli angeboten wird bevor es verschwindet. (Zeitschaltuhr mit Zufallsprogramm) Oder die beiden Zeitintervalle werden vorab vom Besitzer festgelegt.

Geräte die messen, ob das Tier sich an einer bestimmten Stelle befindet oder nicht befindet, können in dem Leckerlispender direkt integriert sein, oder als externe Zweitgeräte arbeiten.

Ein in dem Apparat integrierter Bewegungsmelder evtl. mit Infrarotmessung registriert, wenn kein Lebewesen in der Nähe ist, und gibt dann ein Leckerli frei. Er könnte auch zeitgesteuert agieren, indem er z.B. nur alle 5 Minuten eingeschaltet wird, und wenn er dann nichts mißt, ein Leckerli freigibt.

Dieser oder ein zweiter Bewegungsmelder könnte auch dazu verwendet werden, das er nachdem ein Leckerli freigegeben wurde, weiter aktiv bleibt, und dann misst, wenn sich das Tier nähert. Dieses Nähern würde dann bewirken, dass das Leckerli wieder verschwindet.

Überhaupt können für die Konstruktionen alle bekannten technischen Module zum Einsatz kommen.
Z.B. Infarotmelder, Videoüberwachungssysteme, Kamerasysteme mit Überwachungsfunktion, Alarm-Trittmatten, Differential-Alarm-Schleifen, Zeitrelais mit Magnetkontakten, Chipkarten, RF- Transponder, Magnetkarten, Wärmefühler, Erschütterungsmelder, Folien mit Sensoren, Ultraschall-Echo-Abstandswamer, Laser-Lichtschranken, Zeitschalter mit Zufallsprogramm, unterschiedlichste Funksysteme und kabellose Übertragungssysteme mit unterschiedlichster Reichweite und Frequenz, verkabelte Systeme mit Steckdosenanschluss, usw.

Überhaupt sollte die ganze Konstruktion wasserfest sein, da Elektrik im Spiel ist. Auch sollte sie beißfest sein, um z.B. von einem Hund nicht zerlegt zu werden. allerdings kann sie auch sehr hoch aufgehängt werden.
Sie kann teilweise weich gestaltet sein, wo z.B. die Gefahr besteht, dass sich ein Tier verletzt z.B. durch Einklemmen.

Z.B. ein Hund kann auch durch Geruchseinflüsse angelockt werden kann.
Dies könnte so aussehen, dass ein luftdicht verpacktes Leckerli, z.B. durch Freigabe aus einer luftdicht verschlossenen Box dem Hund ohne zusätzliche Zeichen angeboten wird. Er hat dann z.B. 5 Minuten Zeit, um das Futter zu erreichen, andernfalls verschwindet es wieder, oder es verschwindet durch die Meldung eines Positionsmelders, und das Spiel beginnt später von Neuem.

Insbesondere ist vorgesehen, dass außer Futter auch andere attraktive Objekte oder Spielzeug angeboten werden können und für sie grundsätzlich das gleiche wie für das Futter gesagte gilt.

In einer vorteilhaften Ausgestaltung der Erfindung ist vorgesehen, dass die Zugänglichmachung des Futters mittels einer Futterzugänglichkeitsmachung erfolgt. Nach einer Weiterbildung der Erfindung ist vorgesehen, dass die Unzugänglichmachung des Futters mittels einer Futterunzugänglichmacheinrichtung erfolgt.

In einer vorteilhaften Ausgestaltung der Erfindung ist vorgesehen, dass das Futtergefäß auch durch eine Fernbedienung vom Besitzer gesteuert werden kann, aber eben auch ohne Besein des Besitzers selbständig arbeitet.

Nach einer Weiterbildung der Erfindung ist vorgesehen, dass das Futtergefäß wie ein Kolben ohne Zwischenraum in den Hohlraum des Futterspenders läuft. In einer vorteilhaften Ausgestaltung der Erfindung ist vorgesehen, dass das Futter vorne am Kolben befestigt ist oder durch einen von dem Tier dann selbst zu öffnenden Deckel verfügbar ist.

Weiterhin ist mit Vorteil vorgesehen, dass aus einem Vorratsbehälter ein Leckerli/Spielzeug ausgegeben wird, und dass dieses unzugänglich gemacht wird, wenn es von dem Tier nicht rechtzeitig innerhalb eines einstellbaren Zeitintervalls abgeholt wird.

In einer vorteilhaften Ausgestaltung der Erfindung ist vorgesehen, dass der Hund immer wieder selbstständig vom System aufgefordert wird mitzuspielen, und der Ablauf dann nach vorheriger Programmierung lange Zeit selbständig von sich aus geht, ohne das eine Person anwesend sein muss, und durch die Gestaltung sichergestellt ist, dass der Hund immer in einer bestimmten Zeit von einem zum anderen Element rennen muss, um Erfolg zu haben.

Nach einer Weiterbildung der Erfindung ist vorgesehen, dass der Spielbereich und die Intervalle und Belohnungen vom Besitzer vor-gegeben werden, und der Hund zum schnellen Rennen animiert wird, wobei auch sein Beutetrieb gestillt wird.

Nach einer vorteilhaften Ausgestaltung der Erfindung ist vorgesehen, dass der Hund vornehmlich durch akustische Signale gesteuert wird, oder aber durch Lichtreize oder Bewegungen, oder aufgespeicherte Kommandos seines Besitzers oder auch Geruchseinflüsse, und dass die jeweiligen Intervalle durch einstellbare Zeitschalter gesteuert werden.

In einer vorteilhaften Ausgestaltung der Erfindung ist vorgesehen, dass Element 1 und 2 zusammengestaltet sind, und ihre Signale und so weiter durch vorheriges Programmieren aufeinander abgestimmt sind.

Nach einer Weiterbildung der Erfindung ist vorgesehen, dass ein gewisser Abstand des Hundes vom Element 2 durch Element 1 in Form einer Lichtschranke, eines Bewegungsmelders, eines Berührungssensors oder ähnlichem festgestellt wird.

In einer vorteilhaften Ausgestaltung der Erfindung ist vorgesehen, dass ein Elektronikbereich in Element 2 Signalempfang, akustisches Signal, Rastermechanik zur Leckerlifreigabe, Öffnen des Schiebers zum Verschwinden lassen des Leckerli steuert auch unter Einbindung von Zeitschaltuhren.

Nach einer Weiterbildung der Erfindung ist vorgesehen, dass Element 1 und auch Element 2 an ihrer Außenseite Befestigungselemente besitzen, die ein Umstürzen der Elemente verhindern.

In einer vorteilhaften Ausgestaltung der Erfindung ist vorgesehen, dass Element 2 verschiedenstes Aussehen haben kann, sofern sichergestellt ist, das ein Leckerli oder Futter nur zeitweise angeboten wird.

Nach einer Weiterbildung der Erfindung ist vorgesehen, dass der Futterspender an einer Zimmerdecke oder an einer sonstigen erhöhten Stelle die dem Tier nicht zugänglich ist befestigt wird, und von dort ein Leckerli nach unten befördert wird und später wieder hoch-gezogen wird, so dass es für das Tier zum Beispiel einen Hund nicht mehr zu erreichen ist.

In einer vorteilhaften Ausgestaltung der Erfindung ist vorgesehen, dass das Leckerli für das Tier erkennbar langsam verschwindet und so zum Rennen animiert.

Nach einer Weiterbildung der Erfindung ist vorgesehen, dass das Leckerli langsam nach oben weggezogen wird.

In einer vorteilhaften Ausgestaltung der Erfindung ist vorgesehen, dass das Leckerli langsam in eine Höhle gezogen wird.

Nach einer Weiterbildung der Erfindung ist vorgesehen, dass das Leckerli erkennbar eine Bahn herunterrollt und dann in einer Box oder einem Loch verschwindet.

In einer vorteilhaften Ausgestaltung der Erfindung ist vorgesehen, dass Futter in einem Gefäß angeboten wird und dann durch einen sich schließenden Deckel verdeckt wird.

Nach einer Weiterbildung der Erfindung ist vorgesehen, dass ein zuvor luftdicht verpacktes Leckerli zu einer bestimmten Zeit freigegeben wird, so dass das Tier, zum Beispiel ein Hund, es nun mehr geruchlich erfassen kann.

Die Erfindung betrifft ein Verfahren zur Bewegungsanimation eines Tieres, insbesondere eines Hundes oder einer Katze, mit einer Futterbereitstellungseinrichtung. Es ist vorgesehen, dass die Futterbereitstellungseinrichtung eine Futterportion zugänglich macht und anschließend vor Erreichen durch das Tier wieder unzugänglich macht. Nach einer Weiterbildung der Erfindung ist vorgesehen, dass die

Futterbereitstellungseinrichtung eine Futterportion zugänglich macht und anschließend nach dem Erreichens durch das Tier wieder unzugänglich macht.

In einer vorteilhaften Ausgestaltung der Erfindung ist vorgesehen, dass die vorherigen Ansprüche nicht nur für Leckerli gelten, sondern auch für Spielzeug und andere attraktive Objekte, und das diese Futter und Objekte je nach Tierart variieren.

Nach einer Weiterbildung der Erfindung ist vorgesehen, dass derartige Anordnungen bei allen Tierarten Verwendung finden können, sogar für die Tierart Mensch (z. B. Kinderspiel, Anreiz für Aufgabenerledigung, Sportgerät).

## Patentansprüche

1. Tiertrainingsvorrichtung, insbesondere für einen Hund oder eine Katze, mit einer Futterbereitstellungseinrichtung, **dadurch gekennzeichnet, dass** mittels einer Zeitschaltuhr mit Zufallsprogramm Zeitintervalle, nach denen durch die Futterbereitstellungseinrichtung eine Futterportion zugänglich gemacht wird, und/oder Zeitintervalle, wie lange die Futterportion dann verfügbar ist, nach dem Zufallsprinzip bestimmt werden, sodass eine Futterportion oder ein Spielzeug zugänglich und anschließend von Zeit zu Zeit vor Erreichen durch das Tier wieder unzugänglich gemacht wird und von Zeit zu Zeit solange zugänglich gemacht wird, dass das Tier - zur Aufrechterhaltung der Motivation - die Futterportion oder das Spielzeug erreicht.

2. Tiertrainingsvorrichtung nach Anspruch 1, **dadurch gekennzeichnet, dass** ein sich bewegendes Futtergefäß mit Positionserfassungssystemen verbunden ist, die die Position des Tieres, z. B. einer Katze, feststellen, und dann die Bewegung des Futtergefäßes entsprechend steuern.

3. Tiertrainingsvorrichtung nach einem oder mehreren der vorhergehenden Ansprüche, insbesondere Anspruch 2, **dadurch gekennzeichnet, dass** das Futtergefäß zeitweise in einem Futterkasten verschwindet und sich mit wechselnden Intervallen und Geschwindigkeiten bewegt, und so das Tier, z. B. eine Katze, artgerecht fordert.

4. Tiertrainingsvorrichtung nach einem oder mehreren der vorhergehenden Ansprüche, **dadurch gekennzeichnet, dass** die Positionserfassungssysteme zur Positionserfassung des Tieres insbesondere Lichtschranken, Bewegungsmelder, Abstandsmesser, Positionsmesser, Kontrollschranken, Erkennungssysteme oder Systeme mit Elementen, die in einem Halsband integriert sein können, sind.

5. Tiertrainingsvorrichtung nach einem oder mehreren der vorhergehenden Ansprüche, **dadurch gekennzeichnet, dass** mittels eines korrespondierenden oder auch unabhängig arbeitenden zweiten Futtergefäßes (zweiten Systems) die Aufmerksamkeit des Tieres immer neu erregt wird.

6. Tiertrainingsvorrichtung nach einem oder mehreren der vorhergehenden Ansprüche, **dadurch gekennzeichnet, dass** die Anlage auch ohne ein zweites Futtergefäß in Betrieb bleibt, indem man die Bewegungsrichtung des Tieres mittels Positionserfassungssystemen ermittelt.

7. Tiertrainingsvorrichtung nach einem oder mehreren der vorhergehenden Ansprüche, insbesondere Anspruch 2, **dadurch gekennzeichnet, dass** nach einer bestimmten Zeit oder einem bestimmten Verlauf der Ablauf gestoppt wird, oder dass das Tier das Futtergefäß aus der Bewegung heraus fängt.

8. Tiertrainingsvorrichtung nach einem oder mehreren der vorstehenden Ansprüche, insbesondere Anspruch 1, **dadurch gekennzeichnet, dass** die Tiertrainingsvorrichtung aus 2 Elementen besteht, wobei Element 1 als Sender dient, der nach Berührung eines Tieres, insbesondere eines Hundes, ein Signal an das Element 2 sendet, wodurch dort, insbesondere mittels Zeitschaltuhr, für eine gewisse Zeit eine als Leckerchen ausgebildete Futterportion freigegeben wird, und so das Tier, insbesondere der Hund, animiert wird, schnell von Element 1 zu Element 2 zu rennen.

9. Tiertrainingsvorrichtung nach einem oder mehreren der vorstehenden Ansprüche, **dadurch gekennzeichnet, dass** zwei gleiche Elemente aufeinander abgestimmt oder auch nicht miteinander abgestimmt arbeiten können und unabhängig voneinander betrieben werden.

10. Tiertrainingsvorrichtung nach einem oder mehreren der vorstehenden Ansprüche, **dadurch gekennzeichnet, dass** ein einzelnes Element mit Abstandsmessung, insbesondere durch ein Funksignal oder einen Durchgangsmelder oder einen Bewegungsmelder, arbeitet.

11. Tiertrainingsvorrichtung nach einem oder mehreren der vorstehenden Ansprüche, **dadurch gekennzeichnet, dass** das Futtergefäß oder Element 2 bei Anwesenheit des Besitzers von diesem auch mittels einer Fernbedienung gesteuert werden kann.

12. Tiertrainingsvorrichtung nach einem oder mehreren der vorhergehenden Ansprüche, insbesondere Anspruch 1, **dadurch gekennzeichnet, dass** das Leckerli für das Tier erkennbar ruhig liegen bleibt, und evtl. zusätzliche Signale (Ton, Licht) dem Tier anzeigen, dass ein Leckerli bereit liegt, bevor ein Zeitschalter oder ein Positionsmelder bewirkt, dass das Leckerli nach einer bestimmten Zeit wieder verschwindet.

13. Tiertrainingsvorrichtung nach einem oder mehreren der vorhergehenden Ansprüche, **dadurch gekennzeichnet, dass** Positionserfassungselemente, die erfassen, ob das Tier in der Nähe ist oder nicht, in dem Leckerlispender integriert sind oder als externes Zweitgerät arbeiten, wobei ein zweites Positionserfassungselement nicht benötigt wird.

14. Verfahren zur Bewegungsanimation eines Tieres, insbesondere eines Hundes oder einer Katze, mit einer Futterbereitstellungseinrichtung, **dadurch gekennzeichnet, dass** die Futterbereitstellungseinrichtung nach dem Zufallsprinzip eine Futterportion oder ein Spielzeug zugänglich macht und anschließend von Zeit zu Zeit vor Erreichen durch das Tier wieder unzugänglich macht und von Zeit zu Zeit so lange zugänglich macht, dass das Tier - zur Aufrechterhaltung der Motivation - das Futter oder das Spielzeug erreicht.

## Claims

1. Training device for animals, in particular for a dog or a cat, with a feed providing means, **characterized in that** time intervals after which a feed portion is made accessible by the feed providing means and/or time intervals as to how long the feed portion is then available are determined in accordance with the random principle by means of a timer with a random program, so that a feed portion or a toy is made accessible and subsequently from time to time, before being reached by the animal, inaccessible again and from time to time is made accessible sufficiently long for the animal - to maintain motivation - to reach the feed portion or the toy.

2. Training device for animals according to claim 1, **characterized in that** a moving feed vessel is connected to position detection systems which ascertain the position of the animal, for example a cat, and then control the movement of the feed vessel accordingly.

3. Training device for animals according to one or more of the preceding claims, in particular claim 2, **characterized in that** the feed vessel intermittently disappears in a feed box and moves at alternating intervals and speeds, and thus challenges the animal, for example a cat, in a species-appropriate manner.

4. Training device for animals according to one or more of the preceding claims, **characterized in that** the position detection systems for detecting the position of the animal are in particular light barriers, motion detectors, distance meters, position meters, control barriers, detection systems or systems comprising elements which can be integrated in a collar.

5. Training device for animals according to one or more of the preceding claims, **characterized in that** the animal's attention is stimulated again and again by means of a corresponding or else independently working second feed vessel (second system).

6. Training device for animals according to one or more of the preceding claims, **characterized in that** it remains operative even without a second feed vessel, **in that** the animal's direction of movement is determined by means of position detection systems.

7. Training device for animals according to one or more of the preceding claims, in particular claim 2, **characterized in that** after a specific time or a specific course, the sequence is stopped, or **in that** the animal catches the feed vessel out of the movement.

8. Training device for animals according to one or more of the preceding claims, in particular claim 1, **characterized in that** the Training device for animals consists of two elements, wherein element 1 serves as a transmitter which, once touched by an animal, in particular a dog, sends a signal to element 2, as a result of which for a certain time a feed portion in the form of a treat is released there, in particular by means of a timer, and the animal, in particular the dog, is thus encouraged to run quickly from element 1 to element 2.

9. Training device for animals according to one or more of the preceding claims, **characterized in that** two identical elements can work in adaptation to each other or else not in adaptation to each other and are operated independently of each other.

10. Training device for animals according to one or more of the preceding claims, **characterized in that** a single element works with distance measurement, in particular by a radio signal or a pass detector or a motion detector.

11. Training device for animals according to one or more of the preceding claims, **characterized in that** the feed vessel or element 2 can also be controlled by means of a remote control by the owner when he is present.

12. Training device for animals according to one or more of the preceding claims, in particular claim 1, **characterized in that** the treat remains still so that the animal can see it, and if appropriate additional signals (sound, light) indicate to the animal that a treat is lying ready, before a time switch or a position detector causes the treat to disappear again after a specific time.

13. Training device for animals according to one or more of the preceding claims, **characterized in that** position detection elements, which detect whether or not the animal is nearby, are integrated in the treat dispenser or work as an external secondary apparatus, wherein a second position detection element is not required.

14. Method for encouraging movement of animals, in particular for a dog or a cat, with a feed providing means, **characterized in that** the feed providing means makes a feed portion or a toy accessible in accordance with the random principle and subsequently from time to time, before being reached by the animal, inaccessible again and from time to time makes it accessible sufficiently long for the animal - to maintain motivation - to reach the feed or the toy.

## Revendications

1. Dispositif d'entraînement pour des animaux, en particulier pour un chien ou un chat, avec un dispositif de mise à disposition de nourriture, **caractérisé en ce que**, au moyen d'un minuteur avec programme aléatoire, des intervalles de temps après lesquels une portion de nourriture est rendue accessible par le dispositif de mise à disposition de nourriture, et/ou des intervalles de temps fixant la durée pendant laquelle la portion de nourriture est alors disponible sont déterminés suivant le principe aléatoire, de telle sorte qu'une portion de nourriture ou un jouet est rendu accessible et ensuite de temps en temps est rendu de nouveau inaccessible avant que l'animal l'ait atteint et de temps en temps est rendu accessible assez longtemps pour que l'animal, afin d'entretenir sa motivation, atteigne la portion de nourriture ou le jouet.

2. Dispositif d'entraînement pour des animaux selon la revendication 1, **caractérisé en ce qu'**un récipient de nourriture se déplaçant est relié à des systèmes de détection de position, qui déterminent la position de l'animal, d'un chat, par ex., et commandent ensuite le déplacement du récipient de nourriture de manière correspondante.

3. Dispositif d'entraînement pour des animaux selon l'une ou plusieurs des revendications précédentes, en particulier la revendication 2, **caractérisé en ce que** le récipient de nourriture disparaît par intermittence dans une boîte de nourriture et se déplace avec des intervalles et des vitesses variables, et provoque ainsi l'animal, un chat, par ex., de manière spécifique à son espèce.

4. Dispositif d'entraînement pour des animaux selon l'une ou plusieurs des revendications précédentes, **caractérisé en ce que** les systèmes de détection de position servant à détecter la position de l'animal sont en particulier des barrages photoélectriques, des dispositifs de signalisation de déplacement, des mesureurs de distance, des mesureurs de position, des barrières de contrôle, des systèmes de reconnaissance ou des systèmes dotés d'éléments qui peuvent être intégrés dans un collier.

5. Dispositif d'entraînement pour des animaux selon l'une ou plusieurs des revendications précédentes, **caractérisé en ce que** l'attention de l'animal est sans cesse excitée au moyen d'un deuxième récipient de nourriture (deuxième système) correspondant ou bien fonctionnant de manière indépendante.

6. Dispositif d'entraînement pour des animaux selon l'une ou plusieurs des revendications précédentes, **caractérisé en ce qu'**il reste en fonctionnement même sans un deuxième récipient de nourriture en déterminant la direction de déplacement de l'animal au moyen de systèmes de détection de position.

7. Dispositif d'entraînement pour des animaux selon l'une ou plusieurs des revendications précédentes, en particulier la revendication 2, **caractérisé en ce que**, après un temps déterminé ou un déroulement déterminé, le processus est stoppé, ou **en ce que** l'animal attrape le récipient de nourriture à partir du déplacement.

8. Dispositif d'entraînement pour des animaux selon l'une ou plusieurs des revendications précédentes, en particulier la revendication 1, **caractérisé en ce que** le Dispositif d'entraînement pour des animaux est composé de deux éléments, l'élément 1 servant d'émetteur qui envoie un signal à l'élément 2 après le contact d'un animal, en particulier d'un chien, ce par quoi alors une portion de nourriture réalisée sous la forme de friandise est libérée pour un certain temps, en particulier au moyen d'un minuteur, et ainsi l'animal, en particulier le chien est stimulé pour courir vite de l'élément 1 à l'élément 2.

9. Dispositif d'entraînement pour des animaux selon l'une ou plusieurs des revendications précédentes, **caractérisé en ce que** deux éléments identiques peuvent fonctionner en étant accordés l'un à l'autre ou également non accordés l'un à l'autre et être exploités indépendamment l'un de l'autre.

10. Dispositif d'entraînement pour des animaux selon l'une ou plusieurs des revendications précédentes, **caractérisé en ce qu'**un élément unique fonctionne avec mesure de distance, en particulier par un signal radio ou un dispositif de signalisation de passage ou un dispositif de signalisation de déplacement.

11. Dispositif d'entraînement pour des animaux selon l'une ou plusieurs des revendications précédentes, **caractérisé en ce que** le récipient de nourriture ou l'élément 2 peut être commandé en présence du propriétaire par celui-ci également au moyen d'une télécommande.

12. Dispositif d'entraînement pour des animaux selon l'une ou plusieurs des revendications précédentes, en particulier la revendication 1, **caractérisé en ce que** la friandise reste immobile de manière reconnaissable pour l'animal, et **en ce que** des signaux supplémentaires éventuels (son, lumière) indiquent à l'animal qu'une friandise est disponible avant qu'un interrupteur à minuteur ou un détecteur de position provoque la nouvelle disparition de la friandise après un temps déterminé.

13. Dispositif d'entraînement pour des animaux selon l'une ou plusieurs des revendications précédentes, **caractérisé en ce que** des éléments de détection de position qui détectent si l'animal est à proximité ou non sont intégrés dans le distributeur de friandise ou fonctionnent comme deuxième appareil externe, un deuxième élément de détection de position n'étant pas nécessaire.

14. Procédé pour la stimulation du déplacement d'un animal, en particulier d'un chien ou d'un chat , avec un dispositif de mise à disposition de nourriture, **caractérisé en ce que** le dispositif de mise à disposition de nourriture rend accessible une portion de nourriture ou un jouet suivant le principe aléatoire et ensuite de temps en temps le rend de nouveau inaccessible avant que l'animal l'ait atteint et de temps en temps le rend accessible assez longtemps pour que l'animal, afin d'entretenir sa motivation, atteigne la nourriture ou le jouet.
